# EUROPÄISCHE PATENTSCHRIFT

(11) **EP 0 714 017 B1**
(45) Veröffentlichungstag und Bekanntmachung des Hinweises auf die Patenterteilung: **12.07.2000**
(21) Anmeldenummer: 95118144.5
(22) Anmeldetag: 16.11.1995
(51) Int. Cl.: G01L 9/12

(54) **Kapazitiver Drucksensor**
Capacitive pressure sensor
Capteur de pression capacitif

(30) Priorität: 24.11.1994 DE 4441908
(43) Veröffentlichungstag der Anmeldung: 29.05.1996
(73) Patentinhaber: SIEMENS AKTIENGESELLSCHAFT, 80333 München (DE)
(72) Erfinder: Catanescu, Ralf, D-28201 Bremen (DE); Scheiter, Thomas, D-80469 München (DE); Hierold, Christofer, Dr., D-81739 München (DE)

(56) Entgegenhaltungen:
- DE-A- 3 445 774
- US-A- 4 665 610

## Beschreibung

Die vorliegende Erfindung betrifft einen mikromechanisch herstellbaren kapazitiven Drucksensor.

Zur Messung von Absolutdruck werden kapazitive Drucksensoren eingesetzt. Eine geschlossene Kammer mit einem Bezugsdruck ist durch eine elastische Membran abgeschlossen, die einem äußeren Druck ausgesetzt ist. Die elektrisch leitende Membran bildet mit der gegenüberliegenden Seite dieser Kammer einen Plattenkondensator. Aufgrund der Druckdifferenz zwischen dem äußeren Druck und dem inneren Bezugsdruck wird die Membran verformt. Durch den geänderten Abstand zwischen der Membran und der als Gegenelektrode wirkenden Kammerrückseite ändert sich die Kapazität dieses Kondensators. Aus dieser Kapazitätsänderung läßt sich der äußere Druck bestimmen.

In der US 5 095 401 von Paul M. Zavracky e.a. sind Drucksensoren auf SOI-Substrat beschrieben, bei denen ein Hohlraum hergestellt wird, indem ein mittels LOCOS hergestellter Bereich aus Siliziumoxid durch kleine Öffnungen in einer darauf aufgebrachten Schicht entfernt wird. Diese Öffnungen werden anschließend verschlossen durch Oxidation des angrenzenden Siliziums oder durch Aufbringen einer weiteren Schicht aus Siliziumnitrid, Polysilizium oder dgl. In dieser Patentschrift ist auch die Verwendung der dort angegebenen Herstellungsmethode zur Herstellung von kapazitiv messenden Drucksensoren beschrieben. Bestandteil der Membran dieses Drucksensors ist eine kristallisierte Siliziumschicht, die außerhalb des Drucksensors zur Integration von elektronischen Bauelementen und im Bereich der Membran zur Ausbildung von Piezowiderständen verwendet wird.

In der US 4,665,610 ist ein Herstellungsverfahren für Halbleitersensoren beschrieben, bei dem auf eine Opferschicht eine perforierte Schicht aufgebracht wird. Darauf wird eine zweite Schicht abgeschieden und so strukturiert, daß die Öffnungen in der ersten Schicht verschlossen bleiben. Anschließend wird eine dritte Schicht aufgebracht, die mit Ätzöffnungen derart versehen wird, daß die zweite Schicht stellenweise freigelegt ist. Die Materialien der Schichten werden so gewählt, daß die zweite Schicht bezüglich der anderen beiden Schichten selektiv ätzbar ist. Durch Entfernen der zweiten Schicht werden Ätzkanäle gebildet, durch die hindurch ein Bereich der Opferschicht entfernt werden kann. Falls die dritte Schicht Silizium ist, werden die Ätzkanäle durch thermische Oxidation des Siliziums verschlossen. Andernfalls wird eine weitere Schicht aus Silizium aufgebracht, die ein Verschließen der Ätzkanäle durch thermische Oxidation ermöglicht. Eine so erhaltene Membran über dem ausgeätzten Hohlraum in der Opferschicht kann als Drucksensormembran verwendet werden. Für kapazitive Messung ist eine obere Schichtlage des Substrates elektrisch leitend ausgebildet.

Aufgabe der vorliegenden Erfindung ist es, einen verbesserte mikromechanischen Drucksensor und ein zugehöriges Herstellungsverfahren anzugeben, das in einen BiCMOS-Prozeß problemlos integrierbar ist.

Diese Aufgabe wird mit dem Drucksensor mit den Merkmalen des Anspruches 1 und mit dem Herstellungsverfahren mit den Merkmalen des Anspruches 4 gelöst. Weitere Ausgestaltungen ergeben sich aus den jeweiligen abhängigen Ansprüchen.

Der erfindungsgemäße Drucksensor ist ein kapazitiv messender Drucksensor, bei dem die Membran elektrisch leitend ausgebildet ist. Als Material für die Membran kommt z. B. leitfähig dotiertes Polysilizium, wie es im Rahmen des Herstellungsprozesses integrierter Schaltungen für die Gateelektrode von Feldeffekttransistoren aufgebracht wird, oder ein Metall, das z. B. zusammen mit einer für elektronische Schaltungen vorgesehenen Metallisierungsebene aufgebracht wird, in Frage. Bei der Herstellung wird diese Membran mit mehreren Ätzöffnungen versehen, durch die hindurch unter der Membran befindliches Material durch Ätzen entfernt wird. Es sind daher keine zusätzlichen Schichten oder Maskenschritte gegenüber einem CMOS-Standard-Prozeßablauf erforderlich. Diese Ätzöffnungen sind durch Bestandteile einer nachfolgend aufgebrachten Planarisierungsschicht aus einem Dielektrikum verschlossen. Die Membran kann unter Ausnutzung nachfolgend aufgebrachter Schichten versteift oder ihre schwingfähige Masse vergrößert sein.

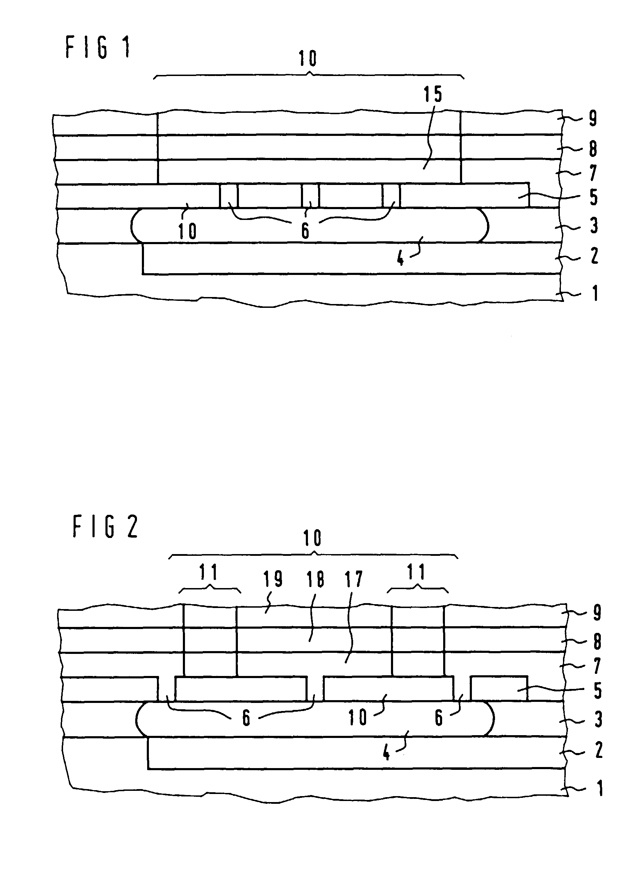

Es folgt eine Beschreibung des erfindungsgemäßen Drucksensors sowie der Herstellungsverfahren anhand der in den Figuren 1 und 2 dargestellten Ausführungsbeispiele.
- Figur 1: zeigt eine typische Ausgestaltung des erfindungsgemäßen Drucksensors im Querschnitt.
- Figur 2: zeigt eine alternative Ausgestaltung mit einem stempelartigen Aufsatz auf der Membranoberseite.

Bei dem erfindungsgemäßen Drucksensor ist in einem Substrat 1 (vgl. Figur 1) z. B. aus Silizium ein leitfähiger Bereich 2 z. B. durch Dotieren des Halbleitermateriales oder durch Aufbringen einer gesonderten Schicht ausgebildet. Darüber befindet sich eine weitere Schicht, die für die Herstellung des für den Drucksensor erforderlichen Hohlraumes vorgesehen ist. Diese Schicht kann entweder als sogenannte Opferschicht gesondert aufgebracht werden oder durch einen oberen Schichtanteil des Substrates gebildet sein. Diese Schicht oder dieser schichtartige obere Anteil wird im folgenden und in den Ansprüchen als Hilfsschicht 3 bezeichnet. Vorzugsweise wird die Hilfsschicht 3 mittels LOCOS als aus dem Silizium des Substrates durch thermische Oxidation hergestellte Oxidschicht ausgebildet.

Über der Hilfsschicht ist eine Membranschicht 5 aufgebracht. Diese Membranschicht 5 ist z. B. Polysilizium und wird vorteilhaft bei der Herstellung zusammen mit den Gate-Elektroden von MOSFETs hergestellt. Falls ein elektrisch leitender Anteil dieser Membranschicht 5 auf der Hilfsschicht 3 aufgebracht ist, ist die Hilfsschicht 3 elektrisch isolierend, damit die Membranschicht 5 und der leitfähige Bereich 2 voneinander elektrisch isoliert sind. Die Hilfsschicht 3 ist bei den bevorzugten Ausführungsformen ohnehin ein elektrischer Isolator. In dieser Membranschicht 5 befinden sich Aussparungen 6, die bei der Herstellung als Öffnungen für das Ausätzen des im Bereich der Membran 10 unterhalb der Membranschicht 5 ausgebildeten Hohlraumes dienen. Um den Aufbau eines Bezugsdruckes in dem Hohlraum 4 zu ermöglichen, sind die Aussparungen 6 in der Membranschicht 5 z. B. mit einem Dielektrikum verschlossen, was Teil einer aufgebrachten Verschlußschicht 7 ist. Bei dieser Verschlußschicht 7 kann es sich z. B. um eine als Planarisierungsschicht ganzflächig aufgebrachte Schicht aus Dielektrikum handeln.

Entsprechend dem Gesamtprozeß können weitere Schichten 8, 9 zusätzlich aufgebracht sein. Im Bereich der Membran 10 sind die Verschlußschicht 7 und diese weiteren Schichten 8, 9 bei dem in Figur 1 dargestellten Ausführungsbeispiel entfernt; es kann aber zur Verstärkung und Versteifung der Membran eine Versteifungsschicht 15 ganzflächig auf die Membran aufgebracht sein. In der Zeichnung der Figur 1 ist diese Versteifungsschicht 15 in derselben Höhe wie die Verschlußschicht 7 eingezeichnet. Einen Schnitt andeutende Schraffuren wurden in der Zeichnung der Übersichtlichkeit halber weggelassen. Bei Vorhandensein der Versteifungsschicht 15 sind nur der den Hohlraum 4 bezeichnende Bereich und die über der Membran 10 befindlichen Bereiche der Schichten 8 und 9 Aufsichten auf die rückseitigen seitlichen Oberflächen der betreffenden Schichten. Bei Fehlen der Versteifungsschicht 15 ist entsprechend auch dieser Bereich eine Aufsicht auf die rückseitige Seitenfläche der Schicht 7. Alle übrigen Bereiche in der Zeichnung sind Schnitte. Die Versteifungsschicht 15 kann z. B. durch Metall gebildet sein, das zu einer Metallisierungsebene gehört, die für eine ebenfalls auf dem Substrat hergestellte elektronische Schaltung aufgebracht worden ist. Durch die Versteifung der Membran wird bei gleichen Abmessungen der Meßbereich zu höheren Drücken hin erweitert. Das Entfernen der nicht benötigten Schichtanteile der Verschlußschicht 7 und der weiteren Schichten 8, 9 erfolgt bei der Herstellung durch Ätzen während eines so begrenzten Zeit intervalles, daß dabei die Verschlüsse der Aussparungen 6 in der Membranschicht 5 nicht wieder entfernt werden.

Die Membranschicht 5 kann ein Metall oder eine Schichtfolge aus mehreren Metallschichten sein. Bei dieser Ausführungsform wird vorzugsweise die Membranschicht als Teil einer oder mehrerer der Metallisierungsebenen, die für elektronische Schaltungen vorgesehen sind, aufgebracht. Für die Planarisierung von Bauelementen im Rahmen des Gesamtprozesses vor dem Metall aufgebrachte Schichten (z. B. BPSG, Borphosphorsilikatglas) können dann zur Vergrößerung der Hilfsschicht 3 ebenfalls im Bereich des Drucksensors aufgebracht werden. Die LOCOS-Schicht kann dann entsprechend dünner hergestellt sein.

Besonders zweckmäßig ist es, wenn für die Membranschicht die erste Metallisierungsebene (Verdrahtungsebene) verwendet wird, weil dann als Verschlußschicht die zwischen der ersten und der zweiten Metallisierungsebene ohnehin aufzubringende Isolationsschicht verwendet werden kann. Auch hier werden über der Membran aufgebrachte weitere Schichten durch zeitlich begrenztes Ätzen entfernt, ohne daß die Membranschicht 5 und die Verschlüsse der Aussparungen beschädigt würden.

Bei dem erfindungsgemäßen Drucksensor kann die Anzahl und Anordnung der Aussparungen in der Membranschicht so gewählt werden, daß das Ausätzen des darunter herzustellenden Hohlraumes zeitlich mit den Prozeßschritten des Gesamtprozesses kompatibel ist. Im Gegensatz zu Verfahren, die den Hohlraum von den Membranrändern her ätzen, kann der erfindungsgemäße Drucksensor hergestellt werden, ohne daß zusätzliche strukturierte Oxidschichten hergestellten werden müssen und ohne daß zu lange Ätzzeiten notwendig sind.

Bei dem Ausführungsbeispiel der Figur 2 sind Anteile 17, 18, 19 der Verschlußschicht 7 und der weiteren Schichten 8, 9 auf der Membran belassen. Um die Beweglichkeit der Membran zu ermöglichen, sind diese Anteile 17, 18, 19 ringsum durch eine Öffnung 11 von dem Rest der Schichten getrennt. Auf diese Weise ist eine Art stempelförmiger Aufsatz auf dem mittleren Teil der Membran 10 ausgebildet. Die Öffnung 11 reicht bis auf die Membranschicht 5 hinunter und kann z. B. in Aufsicht kreisringförmig sein. Bei einer viereckigen Membran kann diese Öffnung 11 in Aufsicht aber z. B. auch rechteckig berandet sein. Die Aussparungen 6 sind vorzugsweise nicht im Bereich dieser Öffnung 11 vorhanden. Dann wirkt nämlich bei der Herstellung die Membranschicht 5 beim Ausätzen der Öffnung 11 als Ätzstoppschicht. An den Rändern der Membran und im inneren Bereich unter dem getrennten Anteil 17 der Verschlußschicht 7 ist in Figur 2 je eine Aussparung 6 eingezeichnet. Es können aber grundsätzlich beliebig viele Aussparungen 6 vorhanden sein. Die Anzahl und Größe ist jeweils durch die Größe des herzustellenden Hohlraumes 4 und die übrigen Abmessungen bestimmt. Wenn die Bereiche der Öffnungen 11 keine Aussparungen 6 aufweisen, dauert in diesen Bereichen das Ausätzen des Hohlraumes 4 länger. Damit diese längere Ätzzeit für mit dem Drucksensor integrierte weitere Bauelemente nicht problematisch wird, ist ggf. die Größe der mit der Öffnung 11 freigelegten Fläche der Membranschicht 5 ausreichend klein zu bemessen. Für eine ausreichende Beweglichkeit der Membran kann es genügen, wenn eine z. B. kreisringförmige Öffnung 11 so schmal hergestellt wird, daß Aussparungen 6 für den Ätzprozeß ausreichend dicht angeordnet werden können.

Die ringsum von den restlichen Anteilen der Schichten getrennten Anteile 17, 18, 19 versteifen die Membran, so daß bei gleichen Abmessungen der Meßbereich zu höheren Drücken hin erweitert wird. Außerdem wird die träge Masse der Membran erhöht, so daß ggf. ein Rauschen im Meßsignal als Folge sehr kurzzeitiger Druckschwankungen unterdrückt werden kann. Auch bei dieser Ausführungsform der Figur 2 kann die Membranschicht 5 z. B. Polysilizium sein oder eine ggf. mehrschichtige Metallschicht. Die Ausführungsform der Figur 2 unterscheidet sich von der der Figur 1 durch die Anordnung der Aussparungen 6, durch den Verbleib der Verschlußschicht 7 über den damit verschlossenen Aussparungen 6 und durch die stempelartige Struktur aus durch die Öffnung 11 von dem Rest der Schichten getrennten Schichtanteilen auf der dem Hohlraum 4 abgewandten Seite der Membranschicht 5.

## Patentansprüche

1. Drucksensor als Halbleiterbauelement,
bei dem ein Hohlraum (4) vorhanden ist, der einseitig von einer Membran (10) begrenzt ist, die im wesentlichen durch eine elektrisch leitfähige Membranschicht (5) gebildet ist, bei dem in dieser Membranschicht (5) im Bereich dieser Membran (10) jeweils beide Oberflächen dieser Membranschicht (5) schneidende Aussparungen (6) vorhanden sind, in die ein Dielektrikum als Teil einer Verschlußschicht (7) eingebracht ist,
bei dem auf der von der Membranschicht (5) abgewandten Seite des Hohlraumes (4) ein elektrisch leitfähiger Bereich (2) vorhanden ist,
bei dem diese Membran (10) so verformbar ist, daß bei einer Veränderung eines auf der von diesem Hohlraum (4) abgewandten Seite der Membran (10) vorhandenen Druckes innerhalb eines vorgegebenen Intervalles eine über elektrische Anschlüsse meßbare Änderung der elektrischen Kapazität zwischen dieser Membranschicht (5) und diesem leitfähigen Bereich (2) eintritt, und
bei dem Kontakte für diese elektrischen Anschlüsse dieser Membranschicht (5) und dieses leitfähigen Bereiches (2) vorhanden sind,
**dadurch gekennzeichnet, daß**
ein Anteil (17) der Verschlußschicht (7) die Membranschicht (5) im Bereich des Hohlraumes (4) teilweise bedeckt, auf diesem Anteil (17) der Verschlußschicht (7) mindestens eine weitere Schicht als Versteifungsschicht (18, 19) aufgebracht ist und
rings um die auf die Membranschicht (5) aufgebrachten Schichten (17, 18, 19) eine Öffnung (11) vorhanden ist, die bis auf die Membranschicht (5) hinunterreicht.

2. Drucksensor nach Anspruch 1,
bei dem die auf die Membranschicht (5) aufgebrachten Schichten (17, 18, 19) die mit einem Teil der Verschlußschicht (7) verschlossenen Aussparungen (6) bedecken.

3. Drucksensor nach Anspruch 1 oder 2,
bei dem die Membranschicht (5) eine Polysiliziumschicht, eine Metallschicht oder eine Schichtfolge aus mehreren Metallschichten ist.

4. Verfahren zum Herstellen eines Drucksensors mit folgenden Schritten:
a)Ein elektrisch leitend dotierter Bereich (2) wird an einer Oberseite eines Substrates (1) aus Halbleitermaterial hergestellt;
b)eine für die Herstellung eines Hohlraumes (4) vorgesehene Schicht (3) wird über diesem Bereich (2) hergestellt und darauf eine Membranschicht (5) aufgebracht;
c)mittels einer Maske werden Aussparungen (6) in einer für die nachfolgenden Schritte d) und e) bemessenen Größe in dieser Membranschicht (5) im Bereich der bezüglich der Schichtebenen senkrechten Projektion des herzustellenden Hohlraumes (4) hergestellt;
d)unter Verwendung dieser Aussparungen (6) wird ein Hohlraum (4) zwischen der Membranschicht (5) und dem dotierten Bereich (2) ausgeätzt;
e)die Aussparungen (6) werden verschlossen;
f)die für das Anlegen einer elektrischen Spannung an die Membranschicht (5) und den dotierten Bereich (2) erforderlichen Mittel werden hergestellt und die Membran so fertiggestellt, daß sie die vorgesehene Verformbarkeit aufweist;
**dadurch gekennzeichnet, daß**
in Schritt b eine Polysiliziumschicht, eine Metallschicht oder eine Schichtfolge aus mehreren Metallschichten als Membranschicht (5) aufgebracht wird und
Schritt e ausgeführt wird, indem eine Verschlußschicht (7) als Planarisierungsschicht auf die Membranschicht (5) aufgebracht wird, so daß die Aussparungen (6) verschlossen werden, ohne den Hohlraum (4) aufzufüllen.

5. Verfahren nach Anspruch 4, bei dem
in Schritt f die Verschlußschicht (7; 17) zumindest teilweise von der Membranschicht (5) entfernt wird.

6. Verfahren nach Anspruch 4 oder 5, bei dem
in Schritt f weitere Schichten (8, 9) aufgebracht werden und diese Schichten (8, 9) unter Verwendung einer Maske im Bereich der Membran (10) zumindest bereichsweise entfernt werden.

## Claims

1. Pressure sensor as semiconductor component,
in which there is a cavity (4), which is bounded on one side by a diaphragm (10) formed essentially by an electrically conductive diaphragm layer (5),
in which there are cutouts (6) in the said diaphragm layer (5) in the region of the said diaphragm (10) which in each case pierce both surfaces of the said diaphragm layer (5), into which cutouts a dielectric is introduced as part of a sealing layer (7),
in which there is an electrically conductive region (2) on that side of the cavity (4) which is averted from the diaphragm layer (5),
in which the said diaphragm (10) can be deformed in such a way that in the event of a change in a pressure present on that side of the diaphragm (10) which is averted from the said cavity (4), within a prescribed interval, a change occurs in the electrical capacitance between the said diaphragm layer (5) and the said conductive region (2), which change can be measured via electrical terminals, and
in which there are contacts for the said electrical terminals of the said diaphragm layer (5) and of the said conductive region (2),
characterized in that
a portion (17) of the sealing layer (7) partly covers the diaphragm layer (5) in the region of the cavity (4),
at least one further layer is applied as a reinforcing layer (18, 19) on the said portion (17) of the sealing layer (7), and
there is an opening (11) all around the layers (17, 18, 19) that have been applied to the diaphragm layer (5), which opening reaches down to the diaphragm layer (5).

2. Pressure sensor according to Claim 1,
in which the layers (17, 18, 19) that have been applied to the diaphragm layer (5) cover the cutouts (6) that have been sealed by a part of the sealing layer (7).

3. Pressure sensor according to Claim 1 or 2, in which the diaphragm layer (5) is a polysilicon layer, a metal layer or a layer sequence made of a plurality of metal layers.

4. Method for producing a pressure sensor, having the following steps:
a) a region (2) doped in an electrically conductive manner is produced on a top side of a substrate (1) made of semiconductor material;
b) a layer (3) provided for the production of a cavity (4) is produced above the said region (2) and a diaphragm layer (5) is applied thereto;
c) a mask is used to produce cutouts (6) of a size that is dimensioned for the subsequent steps d) and e) in the said diaphragm layer (5) in the region of the projection, perpendicular with respect to the layer planes, of the cavity (4) to be produced;
d) using the said cutouts (6), a cavity (4) is etched out between the diaphragm layer (5) and the doped region (2);
e) the cutouts (6) are sealed;
f) the means which are necessary to apply an electrical voltage to the diaphragm layer (5) and the doped region (2) are produced and the diaphragm is completed in such a way that it has the envisaged deformability;
characterized in that
in step b, a polysilicon layer, a metal layer or a layer sequence made of a plurality of metal layers is applied as the diaphragm layer (5), and
step e is performed by a sealing layer (7) being applied as a planarization layer to the diaphragm layer (5), with the result that the cutouts (6) are sealed without the cavity (4) being filled.

5. Method according to Claim 4, in which
in step f, the sealing layer (7; 17) is at least partly removed from the diaphragm layer (5).

6. Method according to Claim 4 or 5, in which
in step f, further layers (8, 9) are applied and these layers (8, 9) are removed at least in regions using a mask in the region of the diaphragm (10).

## Revendications

1. Capteur de pression en tant que composant semi-conducteur,
dans lequel se trouve un espace vide (4), qui est limité d'un côté par une membrane (10) formée essentiellement par une couche membrane (5) conductrice de l'électricité,
dans lequel se trouvent, dans cette couche membrane (5), dans la zone de cette membrane (10), des évidements (6) coupant chacune des deux surfaces de cette couche membrane (5) et dans lesquels un diélectrique est introduit en tant que partie d'une couche d'obturation (7),
dans lequel se trouve, sur le côté de l'espace vide (4) opposé à la couche membrane (5), une zone (2) conductrice de l'électricité,
dans lequel cette membrane (10) peut être déformée de telle sorte que, lors de la variation d'une pression à l'intérieur d'une plage fixée, du côté de la membrane (10) opposé à cet espace vide (4), il se produit une variation, mesurable par l'intermédiaire de connexions électriques, de la capacité électrique entre cette couche membrane (5) et cette zone conductrice (2), et
dans lequel se trouvent des contacts pour ces connexions électriques de cette couche membrane (5) et de cette zone conductrice (2),
**caractérisé par le fait**
qu'une partie (17) de la couche d'obturation (7) recouvre partiellement la couche membrane (5) dans la zone de l'espace vide (4),
que, sur cette partie (17) de la couche d'obturation (7), est déposée au moins une autre couche en tant que couche de renforcement (18, 19) et
que, tout autour des couches (17, 18, 19) déposées sur la couche membrane (5), se trouve une ouverture (11) qui s'étend vers le bas jusqu'à la couche membrane (5).

2. Capteur de pression selon la revendication 1
dans lequel les couches (17, 18, 19) déposées sur la couche membrane (5) recouvrent les évidements (6) bouchés par une partie de la couche d'obturation (7).

3. Capteur de pression selon l'une des revendications 1 ou 2,
dans lequel la couche membrane (5) est une couche de polysilicium, une couche de métal ou une succession de plusieurs couches de métal.

4. Procédé pour fabriquer une capteur de pression avec les étapes suivantes:
a) Une zone (2) dopée conductrice de l'électricité est produite sur le côté supérieur d'un substrat (1) en matériau semi-conducteur;
b) Une couche (3) prévue pour la fabrication d'un espace vide (4) est produite sur cette zone (2) et une couche membrane (5) est déposée sur cette couche (3);
c) Au moyen d'un masque, des évidements (6) sont produits, avec des dimensions appropriées aux étapes suivantes d) et e), dans la zone de la projection de l'espace vide (4) que l'on veut fabriquer, perpendiculaire aux plans des couches;
d) En utilisant ces évidements (6), on décape un espace vide (4) entre la couche membrane (5) et la zone dopée (2);
e) On obture les évidements (6);
f) Les moyens nécessaires pour appliquer une tension électrique sur la couche membrane (5) et la zone dopée (2) sont fabriqués et la membrane est achevée de telle sorte qu'elle présente l'aptitude à la déformation souhaitée;
**caractérisé par le fait**
que, au cours de l'étape b) une couche de polysilicium, une couche de métal ou une succession de plusieurs couches de métal sont déposées en tant que couche membrane (5) et
que l'étape e) est exécutée en déposant, sur la couche membrane (5), une couche d'obturation (7) en tant que couche de planarisation de telle sorte que les évidements (6) sont obturés sans remplir l'espace vide (4).

5. Procédé selon la revendication 4
au cours duquel, à l'étape f), on enlève la couche d'obturation (7, 17) au moins en partie.

6. Procédé selon l'une des revendications 4 ou 5
au cours duquel, à l'étape f), on dépose des couches supplémentaires (8, 9) et on enlève ces couches (8, 9), aù moins zone par zone, en utilisant un masque, dans la zone de la membrane (10).
